Europäisches Patentamt

European Patent Office

Office européen des brevets

(19)

(11) Publication number: **0 012 459**
**B1**

(12) # EUROPEAN PATENT SPECIFICATION

(45) Date of publication of patent specification: **14.03.84**

(21) Application number: **79200680.1**

(22) Date of filing: **20.11.79**

(51) Int. Cl.³: **F 16 C 33/60,**
**F 16 C 33/64, F 16 C 43/04,**
**B 23 K 15/00**

(54) **Process for production of an object consisting of at least two parts movable relative to each other, one of which is substantially enclosed within the other, and a device for performing this process.**

(30) Priority: **27.11.78 NL 7811624**

(43) Date of publication of application:
**25.06.80 Bulletin 80/13**

(45) Publication of the grant of the patent:
**14.03.84 Bulletin 84/11**

(84) Designated Contracting States:
**DE FR GB IT NL SE**

(56) References cited:
**GB - A - 1 172 567**
**GB - A - 1 172 568**
**GB - A - 1 357 526**
**GB - A - 1 395 894**
**GB - A - 1 434 940**
**GB - A - 1 475 108**
**US - A - 3 586 396**

(73) Proprietor: **SKF Industrial Trading & Development Company B.V.**
**Kelvinbaan 16 P.O. Box 50**
**NL-3430 AB Nieuwegein (NL)**

(72) Inventor: **Kapaan, Hendrikus Jan**
**Waterhoen 5**
**Nieuwegein (NL)**
Inventor: **Verburgh, Martin Bastiaan**
**Bisschopsweg 212**
**Amersfoort (NL)**

(74) Representative: **Merkelbach, B.**
**SKF Engineering & Research Centre B.V. P.O. Box 50 Plettenburgerweg 6A**
**NL-3430 AB Nieuwegein (NL)**

Courier Press, Leamington Spa, England.

Process for production of an object consisting of at least two parts movable relative to each
other, one of which is substantially enclosed within the other, and a device for performing
this process

The invention relates to a process for the production of an object consisting of at least two annular parts movable relative to each other, one of which or a portion thereof being substantially enclosed within the other, one of the parts being made in at least two separate pieces which are placed against each other and held in the correct position in relation to the other part, wherein one or more loose members are introduced between the annular parts at the time of placing against each other the two pieces of the one part in the correct position in relation to the other part and wherein a high energy beam welding means such as a laser or electron beam set up over the parting line between the two pieces is put in operation, while at least said pieces are moved bodily in order to move the parting line along the energy beam for welding the said pieces together.

In the production of such objects, the positioning of the members between the parts and the welding of said pieces presents a difficult problem in particular when a certain pretension in such objects need to be introduced.

This problem now has been solved due to the fact that said other part is so provided with an opening passing radially therethrough and facing the parting line in assembled condition of the said pieces that the high energy welding means is set up over the said opening allowing the energy beam to reach the parting line through the said opening, whilst the said pieces are set in rotation bodily and said other part is held stationary.

British patent 1.395.894 describes a process for making a bearing assembly by using energy beam welding. However the parts to be welded together are mated to each other due to which high accuracy of both mating parts are necessary. Moreover the welding is made under or nearly under only one row of rolling members. Such asymetric welding connection introduces differences in pre-load or pre-tensioning which shortens the working life time of the bearing device.

The process according to the invention is therefore advantageous for the production of rolling bearings having two rows of rolling members, in which case the innermost race, constituting the inner part, is made in two pieces such that the parting line is located between the rows, so that when these pieces are brought up against each other, an accurate pre-load can be applied to the rolling bearing.

In order to prevent spatters from sticking between the parts during the welding, and/or damage from being done by the heat of the energy beam, a small tube may be arranged in the opening in the outer part, its bottom-end extending to above the parting line. Preferably the tube, which is removable, consists of a material capable of catching and retaining spatters that occur during welding.

Alternatively, on opposed sides of the opening in the outermost part, two annular discs substantially parallel to each other may be attached by their outer peripheries to the inner surface of the outermost part, the inner peripheries of these discs being located on opposed sides of the parting line, over the outer surface of the innermost part. In this way, support may also be provided for cages.

By the process according to the invention, it is in particular a progressive way of producing a rolling bearing, which bearing parts are accurately prestressed or pre-loaded. Another advantage is that locking means such as a ring with lock-nut may be dispensed with. Furthermore, a bearing with tapered rolling members may be obtained in which the inner race is provided with outer shoulders only, thus eliminating extra machining as required to make the inner shoulders.

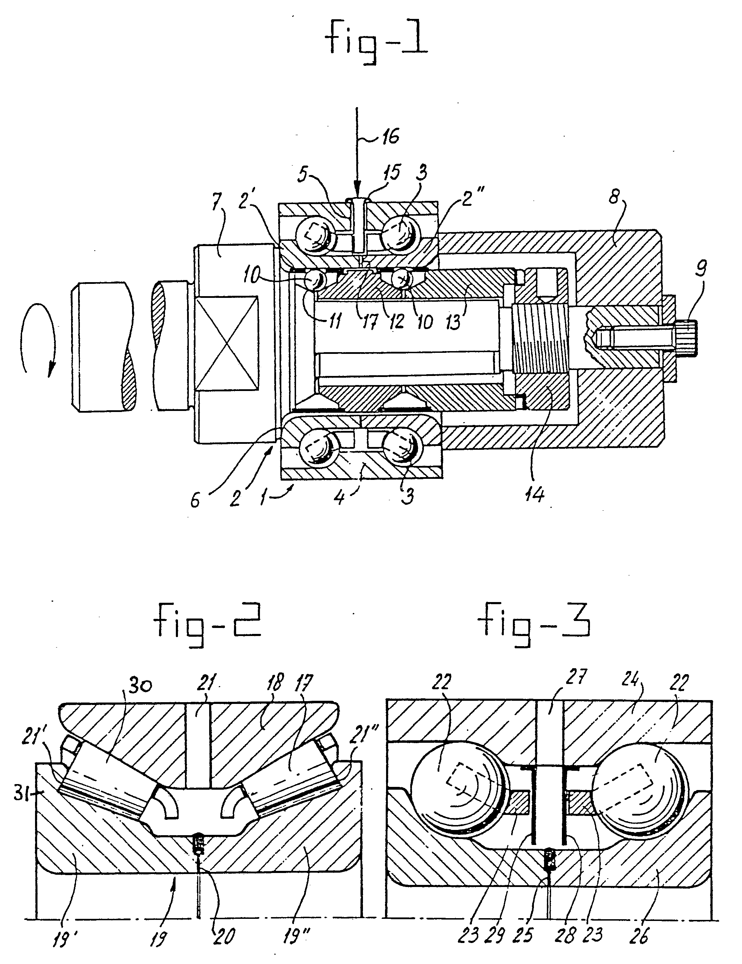

The process according to the invention will be described in more detail with reference to Figure 1 of the drawing, showing a longitudinal section of a device for producing a rolling bearing by the process according to the invention.

As shown in Figure 1, in constructing a ball bearing 1, an inner race 2 is made in two pieces 2' and 2'', which pieces together with rolling members 3 are placed in the correct position inside an outer race 4, which outer race 4 is provided with an opening 5, whereupon the pieces 2' and 2'' are clamped between the shoulder 6 of a spindle 7 and a cup 8. By means of a screw 9, accurate pre-loading can be applied on the rolling members 3. The inner race pieces 2' and 2'' are supported by balls 10 lying in channels formed between a shoulder 11 of the spindle and a sleeve 12 and an adjacent sleeve 13, which sleeves 12 and 13 are held in place by a nut 14.

After the parts of the bearing 1 have thus been assembled, a tube 15 is inserted in the opening 5 of the outer race 4, and an electron beam welding means, not shown, is set up over the tube 15, so that the electron beam, indicated by the arrow 16, can reach the parting 17 between the inner race pieces 2' and 2'' through the tube 15. Then the spindle 7 is set in rotation, while holding the outer race 4 stationary, so that the parting 17 is moved along past the electron beam 16 and the inner race pieces 2' and 2'' are welded together.

Figure 2 of the drawing shows a fully prestressed or pre-loaded roller bearing produced according to the invention, having two rows of tapered rolling members 17 located between the outer race 18 and the inner race 19. The inner race is made in two pieces 19' and 19''

connected together by a weld 20, and these pieces are provided respectively with outer shoulders 21' and 21'' only. An opening 21 is arranged in the outer race 18.

Figure 3 of the drawing shows a ball bearing produced according to the invention, having two rows of balls 22 in cages 23 between the outer race 24 and the inner race 26, the latter made in two pieces connected together by a weld 25. An opening 27 is arranged in the outer race 24, and on opposed sides of this opening, two annular discs 28 and 29 are attached to the inside of the outer race 24. These discs 28 and 29 provide support for the cages 23 as well.

**Claims**

1. A process for the production of an object consisting of at least two annular parts movable relative to each other, one of which parts or a portion thereof being substantially enclosed within the other, one of the parts being made in at least two separate pieces which are placed against each other and held in the correct position in relation to the other part, wherein one or more loose members are introduced between the annular parts at the time of placing against each other the two pieces of the one part in the correct position in relation to the other part and wherein a high energy beam welding means such as a laser or electron beam set up over the parting line between the two pieces is then put in operation, while at least said pieces are moved bodily in order to move the parting line along the energy beam for welding the said pieces together, characterized, in that said other part (4) is so provided with an opening (5) passing radially therethrough and facing the parting line (17) in assembled condition of the said pieces (2', 2'') that the high energy welding means (16) is set up over the said opening (5) allowing the energy beam (16) to reach the parting line (17) through the said opening (5), whilst the said pieces (2', 2'') are set in rotation bodily and said other part (4) is held stationary.

2. Process according to claim 1, for the production of the object having two rows of rolling members (3) between races (2, 4) constituting said annular parts, the innermost part (2) being made in two pieces (2', 2'') so that the parting line (17) lies in a plane perpendicular to the axis of rotation of this part, wherein, during welding, these pieces (2', 2'') are pressed together such that a pre-stress applied on the rolling members (3) is maintained during and after said welding.

3. Process according to claim 1 or 2, characterized in that a tube (15) is arranged in the opening (5) through the outermost part (4), its bottom end extending to above the parting line (17).

4. Process according to claim 3, characterized in that the tube (15) consists of a material being capable of catching and retaining spatters.

5. Process according to claim 1 or 2, characterized in that, on opposed sides of the opening (27) through the outermost part (24), two annular discs (28, 29) substantially parallel to each other are attached by their outer peripheries to the inner surface of said outermost part, the inner peripheries of said discs being located on opposed sides of the parting (25) over the outer surface of the innermost part (26).

6. A device for practicing the process according to claims 1 to 5, characterized by a rotatable spindle (7) provided with guiding or centering means (10—14) and a shoulder (6), and a hollow or cup-like member (8) capable of being placed over the end of the spindle (7) opposite to the shoulders 6 and attached to it, which cup-like member can bear against the race pieces (2', 2'') of the object (1) to be produced, said pieces (2', 2'') being clamped between the shoulder (6) of said spindle (7) and an end part of said cup-like member (8); the device also comprising means (9) acting on said end of said spindle (7) to generate a pre-stress via said hollow member (8) in the object produced, means for holding the other annular part (4) stationary and means for generating a high energy welding beam.

**Patentansprüche**

1. Verfahren zur Herstellung eines Gegenstandes bestehend aus mindestens zwei relativ zueinander bewegbaren Ringteilen, wovon eines im wesentlichen vom anderen umschlossen wird und eines der Teile aus mindestens zwei getrennten Stücken gefertigt wird, die gegeneinander plaziert und in der richtigen Stellung zueinander gehalten werden, wobei ein oder mehrere lose Glieder zwischen die Ringteile zu der Zeit eingesetzt werden, wenn die beiden Stücke des einen Teils in die richtige Stellung im Verhältnis zum anderen Teil plaziert werden, und wobei dann ein über die Teilfuge zwischen den zwei Stücken angestelltes Hochenergie-Strahlschweißmittel wie ein Laser- oder Elektronenstrahl in Betrieb gesetzt wird, während wenigstens die genannten Stücke körperlich bewegt werden, um die Teilfuge längs dem Energiestrahl zum Zusammenschweißen der beiden Stücke zu bewegen, dadurch gekennzeichnet, daß das andere Teil (4) dergestalt mit einer radial hindurchtretenden und gegen die Teilfuge (17) im zusammengesetzten Zustand der genannten Stücke (2', 2'') gerichteten Öffnung (5) versehen ist, daß das Hochenergie-Schweißmittel (16) über der genannten Öffnung (15) angestellt ist und es dem Energiestrahl (16) ermöglicht, die Teilfuge (17) durch die genannte Öffnung (5) zu erreichen, während die genannten Stücke (2', 2'') körperlich in Drehung versetzt und das genannte andere Teil (4) gegen Drehung festgehalten werden.

2. Verfahren nach Anspruch 1 zur Herstellung eines Gegenstandes mit zwei Reihen von Wälzkörpern (3) zwischen die Ringteile bildenden Laufringen (2, 4), von denen der innere aus zwei Stücken (2', 2'') hergestellt ist, dergestalt, daß die Teilfuge (17) in einer Ebene lotrecht zur Drehachse dieses Teils verläuft, wobei während des Schweißens diese Stücke (2', 2'') derart gegeneinander gepreßt werden, daß eine auf die Wälzkörper (3) ausgeübte Vorspannung während und nach dem genannten Schweißen aufrechterhalten wird.

3. Verfahren nach Anspruch 1 oder 2, dadurch gekennzeichnet, daß in der Öffnung (5) durch den äußeren Teil (4) ein Rohr (15) angeordnet wird, dessen Bodenende sich bis oberhalb der Teilfuge (17) erstreckt.

4. Verfahren nach Anspruch 3, dadurch gekennzeichnet, daß das Rohr (15) aus einem Material besteht, welches in der Lage ist, Spritzer aufzufangen und zurückzuhalten.

5. Verfahren nach Anspruch 1 oder 2, dadurch gekennzeichnet, daß an entgegengesetzten Seiten der Öffnung (27) durch das äußere Teil (24) zwei Ringscheiben (28, 29) im wesentlichen parallel zueinander mit ihren Außenumfängen am Innenumfang des äußeren Teils angebracht sind, wobei die inneren Umfänge der genannten Scheiben auf gegenüberliegenden Seiten der Teilfuge (25) über der Außenfläche des inneren Teils (26) angeordnet sind.

6. Vorrichtung zur Durchführung des Verfahrens nach Anspruch 1 bis 5, gekennzeichnet durch eine mit Führungs- oder Zentriermitteln (10—14) und einer Schulter (6) versehene drehbare Spindel (7) und ein über das Ende der Spindel (7) entgegengesetzt zur Schulter (6) angeordnetes und an dieser befestigtes hohles oder becherförmiges Glied (8), welches gegen die Laufringstücke (2', 2'') des herzustellenden Gegenstandes (1) anzuliegen vermag, indem die genannten Stücke (2', 2'') zwischen der Schulter (6) der genannten Spindel (7) und einem Endteil des becherförmigen Gliedes (8) eingespannt sind, wobei die Vorrichtung weiterhin aufweist. Mittel, die gegen das genannte Ende der Spindel (7) wirken, um eine Vorspannung über das hohle Glied (8) in dem hergestellten Gegenstand zu erzeugen, Mittel zum Festhalten des anderen Ringteils (4) gegen Drehung und Mittel zum Erzeugen eines Hochenergie-Schweißstrahls.

**Revendications**

1. Procédé pour la production d'un objet consistant en au moins deux parties annulaires mobiles l'une par rapport à l'autre, dont une première partie, ou une partie de celle-ci, est pratiquement enfermée dans l'autre, l'une des parties étant faite en au moins deux pièces séparées qui sont placées l'une contre l'autre et maintenues dans la position correcte par rapport à l'autre partie, dans lequel une ou plusieurs pièces libres sont introduites entre les parties annulaires au moment de la mise en place, contre chacune des deux autres pièces de la première partie dans la position correcte par rapport à l'autre partie et dans lequel un dispositif de soudage par faisceau à haute énergie, comme un faisceau de laser d'électrons, disposé au-dessus de la ligne de séparation entre les deux pièces, est mis en fonctionnement, pendant au moins que lesdites pièces sont déplacées ensemble pour déplacer la ligne de séparation le long du faisceau d'énergie pour souder lesdites pièces ensemble, procédé caractérisé en ce que ladite autre partie (4) est prévue avec une ouverture (5) qui la traverse radialement et en face de la ligne de séparation (17) à l'état assemblé desdites pièces (2', 2'') de manière que le dispositif de soudage à haute énergie (16) soit disposé au-dessus de ladite ouverture (5) permettant au faisceau d'énergie (16) d'atteindre la ligne de séparation (17) par ladite ouverture (5) pendant que lesdites pièces (2', 2'') sont mises en rotation ensemble et que ladite autre partie (4) est maintenue immobile.

2. Procédé selon la revendication 1, pour la production de l'objet comprenant deux rangées d'éléments roulants (3) entre les chemins de roulement (2,4) constituant lesdites parties annulaires, la partie intérieure (2) étant faite en deux pièces (2', 2'') de manière que la ligne de séparation (17) se situe dans un plan perpendiculaire à l'axe de rotation de cette partie, dans lequel pendant le soudage, ces pièces (2', 2'') sont serrées l'une contre l'autre de manière qu'une précontrainte appliquée aux éléments roulants (3) soit maintenue pendant et après ledit soudage.

3. Procédé selon la revendication 1 ou 2, caractérisé en ce qu'un tube (15) est disposé dans l'ouverture (5) de la partie extérieure (4), son extrémité inférieure s'étend jusqu'au dessus de la ligne de séparation (17).

4. Procédé selon la revendication 3, caractérisé en ce que le tube (15) consiste en une matière capable d'accrocher et de retenir des éclaboussures.

5. Procédé selon la revendication 1, ou 2, caractérisé en ce que, sur les côtés opposés de l'ouverture (27) dans la partie extérieure (24), deux disques annulaires (28, 29) pratiquement parallèles entre eux sont fixés par leurs périphéries extérieures sur la surface intérieure de ladite partie extérieure, les périphéries intérieures desdits disques étant situées sur les côtés opposés de la séparation (25) sur la surface extérieure de la partie intérieure (26).

6. Dispositif pour la mise en oeuvre du procédé selon les revendications 1 à 5, caractérisé par une broche tournante (7), prévue avec un dispositif de guidage ou de centrage (10—14) et un épaulement (6) et une pièce creuse ou en forme de cuvette (8) pouvant être placée sur l'extrémité de la broche (7) opposée à l'épaulement (6) et fixée sur elle, cette pièce en forme de cuvette pouvant s'appuyer contre les pièces (2', 2'') du chemin de roulement de l'objet (1) à produire, lesdites pièces (2', 2'') étant serrées entre l'épaulement (6) de ladite broche (7) et une partie d'extrémité de ladite pièce en forme de cuvette (8), le dispositif comprenant en outre un dispositif (9) agissant sur ladite extrémité de ladite broche (7) pour produire une précontrainte par l'intermédiaire de ladite pièce creuse (8) dans l'objet produit, un dispositif pour maintenir l'autre partie annulaire (4) immobile et un dispositif pour produire un faisceau de soudage à haute énergie.

0 012 459

fig-1

fig-2

fig-3

1